# EUROPEAN PATENT APPLICATION

(11) **EP 4 080 258 A1**
(43) Date of publication of application: **26.10.2022**
(21) Application number: 20902398.5
(22) Date of filing: 18.12.2020
(51) Int. Cl.: G02B 6/44

(54) **OPTICAL TERMINAL BOX FOR DISTRIBUTING OPTICAL POWER**

(30) Priority: 20.12.2019 BR 102019027520
(71) Applicant: Furukawa Electric Latam S.A., 81460-120 Curitiba - PR (BR)
(72) Inventor: PASETTI, Gabriel Tanner, 80310-170 Curitiba - PR (BR); CHIRON, Xavier Benoit Stéphane, 80240-020 Curitiba - PR (BR); DA CRUZ, Marcelo Silva, 82560-400 Curitiba - PR (BR); DE LIMA, João Filipe Alves, 81150-315 Curitiba - PR (BR)
(74) Representative: Clarke Modet & Co.
(86) International application number: PCT/BR2020/050570
(87) International publication number: WO 2021/119792

(57) **Abstract**

The present utility model provides an optical termination box for the distribution of optical power comprising a base (1) and a cover (2) that can be fitted, wherein, when the base (1) and the cover (2) are fitted, the access to the interior of the box is made unfeasible, wherein the base (1) comprises:
internal supports (25) for positioning the fiber optics of splitters circumferentially over the base, forming a single circumferential bundle of fibers;
a support (24a/24b) for unbalanced optical splitter (242), and a support (24a/24b) for balanced optical splitter (241) positioned on opposite sides of the base (1); and
a support (26) for a set (23) of optical adapters that make connections with connectors (230) of optical cables positioned in the lower portion of the base (1), comprising an adapter for optical signal input, an adapter for optical signal redistribution, and at least two adapters for feeding an optical signal to a consumer unit,
wherein the unbalanced splitter (242) is fed by the optical signal input connector generating: a higher power optical signal, feeding the optical signal redistribution connector; and a lower power optical signal feeding the balanced optical splitter (241), wherein the balanced optical splitter (241) is adapted to equally split the optical signal received from the unbalanced optical splitter (242), and direct the split optical signals to the at least two optical signal feeding connectors to a consumer unit.

## Description

### FIELD OF THE UTILITY MODEL

The present utility model is related to an optical termination box. More specifically, the present utility model is related to a compact optical termination box for optical power distribution, optionally in building optical network installations.

### BACKGROUNDS OF THE UTILITY MODEL

In the current state of the art, several devices known as optical termination boxes are known that are used for different purposes. The utility model described in this specification addresses to a specific type of optical termination box used to perform the distribution of building optical power.

A number of patent documents are addressed to devices like these, so that various configurations and arrangements of these devices are described and proposed by such documents. Some of these documents will be presented below, which can be considered more relevant to the present utility model.

Document EP3093698A1 describes a fiber optic cable distribution box, for use in multi-dwelling installations and high/mid-rise buildings, which has fiber optic cable compensated for the drum region, the free rotation of the box and the interface compartment around the axis of the cylindrical outer wall. According to this document, the distribution box can be made of plastic materials, among others, and comprises a base and a cover, wherein the base comprises elements to facilitate its attachment to walls. It is further described that the base comprises a cylindrical element to allow the optical cables to be wound (respecting the bending limit of these cables).

Document WO2017001893A1 discloses an optical termination box having panel connectors to form a compartment with the bottom of the base in the closed panel position and allowing access to the compartment and pre-connectorized optical cable in the open panel position. It can be seen that an opening is further provided for receiving a main cable that is wound on the bottom of the base and later sub-split to be connected to a plurality of connectors.

Document US20090324189A1 discloses apparatus and methods for a modular fiber optic box. A described embodiment includes a base housing configured to receive additional nested components and an adapter plate resiliently connected to the housing and comprising a plurality of fiber optic connectors. The adapter plate is removable from the box and provides access to both sides of the adapter plate. The box further includes a radius limiter nested and resiliently connected to the base housing, a first expansion housing having an outer contour substantially aligned with the base housing and configured to resiliently interlock with the base housing, and a resiliently attached cover to the expansion housing.

Further with respect to the document US20090324189A1, it is also described that the box can receive a plurality of individual optical cables, or can have elements that facilitate the splitting of optical power from a single cable, directing this split optical power to a plurality of connectors.

Document US9885846B2 discloses an optical cable cabinet assembly that includes a cabinet, a cable reel and a length of fiber optic cable. The cabinet defines an interior region, a first opening and a second opening aligned with the first opening. The first and second openings provide access to the interior region. The cable reel is disposed in the interior region of the casing and is rotatably engaged with the casing. The cable reel includes a drum and a flange attached to the drum. The flange has an outer peripheral side, a cable management part, and an adapter bulkhead portion. The bulkhead portion of the adapter extends out of the cable management part and forms a part of the outer peripheral side. The length of fiber optic cable is wound around the cable reel drum.

It can be seen, still in document US9885846B2, that the optical termination box provides for a main optical cable to be inserted into the box, wherein the optical power of this cable is split between a series of connectors, so that the optical cables are distributed in a curved way inside this box. For the correct positioning of these optical cables, the use of supports and bend limiters is provided for.

Document US20100202745A1 discloses a fiber optic distribution device for floor box with two spaced apart lines of radius of curvature control elements attached to the bottom wall of the box, where each spaced apart line runs generally parallel to the side wall of the housing. It is observed that this device allows an optical cable to be introduced into the same, so that this cable is split into more cables, providing the splitting of the initial optical power.

As can be seen, the documents presented above disclose several functional features of optical distribution boxes known from the state of the art. All documents disclose optical box configurations, which aim at carrying out the distribution of optical power, which provides for the use of a series of optical connectors to, among other functions, perform the splitting of the optical power received by a main cable, wherein the cables optical cables are wound inside the box, respecting the bending limit of these cables.

However, the state-of-the-art optical termination boxes still present possibilities for improvement, mainly with regard to the practicality of their installation. More particularly, the way in which the optical cables are attached inside the box, the way of attaching and the position of the optical cable connectors in the box, as well as the configuration of the support to accommodate the body of the device responsible for making the split ratios of optical power can be optimized, as seen in actual applications of the currently known optical distribution boxes.

As will be better detailed below, the present utility model aims at solving the problems of the state of the art described above in a practical and efficient way.

### SUMMARY OF THE UTILITY MODEL

The present utility model aims at providing an optical termination box that offers a more practical way to attach optical adapters to connect optical connectors of internal optical cables, and optical power distribution devices.

In order to achieve the objectives described above, the present utility model provides an optical termination box for optical power distribution comprising a base and a cover that can be fitted, wherein, when the base and cover are fitted, the access to the interior of the box is made unfeasible, wherein the base comprises:
internal supports for positioning fiber optics from splitters circumferentially over the base, forming a single circumferential bundle of fibers;
a support for unbalanced optical splitter, and a support for balanced optical splitter positioned on opposite sides of the base; and
a support for a set of optical adapters that make the connections of the splitters with the optical connectors of optical cables positioned in the lower portion of the base, comprising an optical adapter for optical signal input, an optical adapter for optical signal redistribution, and at least two optical adapters for feeding an optical signal to consumer units,
wherein the unbalanced splitter is fed by the optical signal input connector generating: a higher power optical signal, feeding the optical signal redistribution connector; and a lower power optical signal feeding the balanced optical splitter, and
wherein the balanced optical splitter is adapted to equally split the optical signal received from the unbalanced optical splitter, and direct the split optical signals to at least two optical signal feeding connectors for the consumer units.

### BRIEF DESCRIPTION OF THE FIGURES

The detailed description presented below refers to the attached figures and their respective reference numbers.
**Figure 1** illustrates a front perspective view of an optional configuration of the optical termination box for optical power distribution assembled of the present utility model.
**Figure 2** illustrates a rear perspective view of an optional optical termination box configuration for mounted optical power distribution.
**Figure 3** illustrates a perspective view of the base of the optical termination box of **figure 1****,** according to an optional configuration of the present utility model.
**Figure 4** illustrates a front view of the base of the optical termination box of **figure 1****,** according to an optional configuration of the present utility model.
**Figure 5** illustrates a lower perspective view of the base of the optical termination box of **figure 1****,** according to an optional configuration of the present utility model.
**Figure 6** illustrates a perspective view of the base of the optical termination box of **figure 3**, wherein its main elements are positioned.
**Figure 7** illustrates a front view of the base of the optical termination box of **figure 3**, wherein its main elements are positioned.
**Figure 8** illustrates a perspective view of the cover of the optical termination box of **figure 1****,** according to an optional configuration of the present utility model.

### DETAILED DESCRIPTION OF THE UTILITY MODEL

Preliminarily, it should be emphasized that the description that follows will start from a preferred embodiment of the utility model. As will be apparent to any technician skilled on the subject, however, the utility model is not limited to that particular embodiment.

As described above, the description that follows will be based on the figures presented and attached to this specification. Thus, the entire description will be supported by such figures, so that, whenever possible, it will be indicated which figure best enables the visualization of each presented feature.

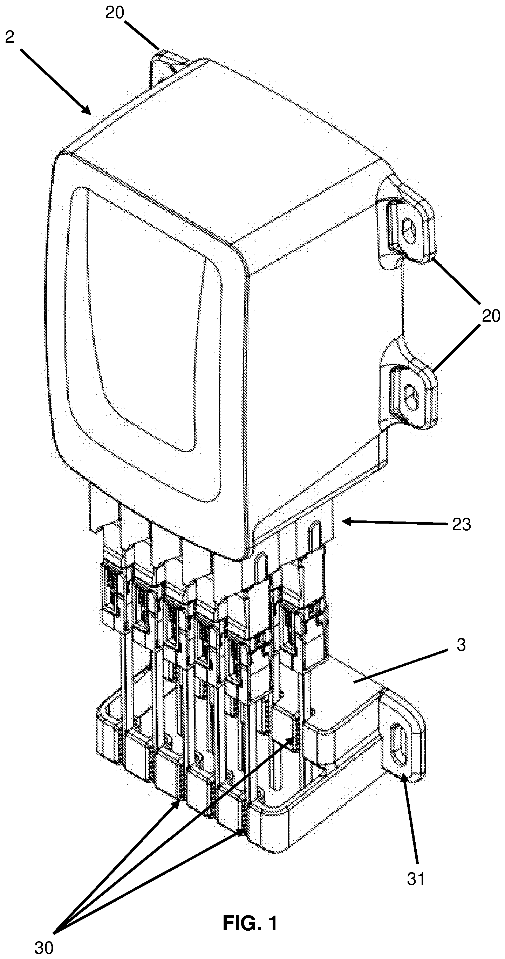

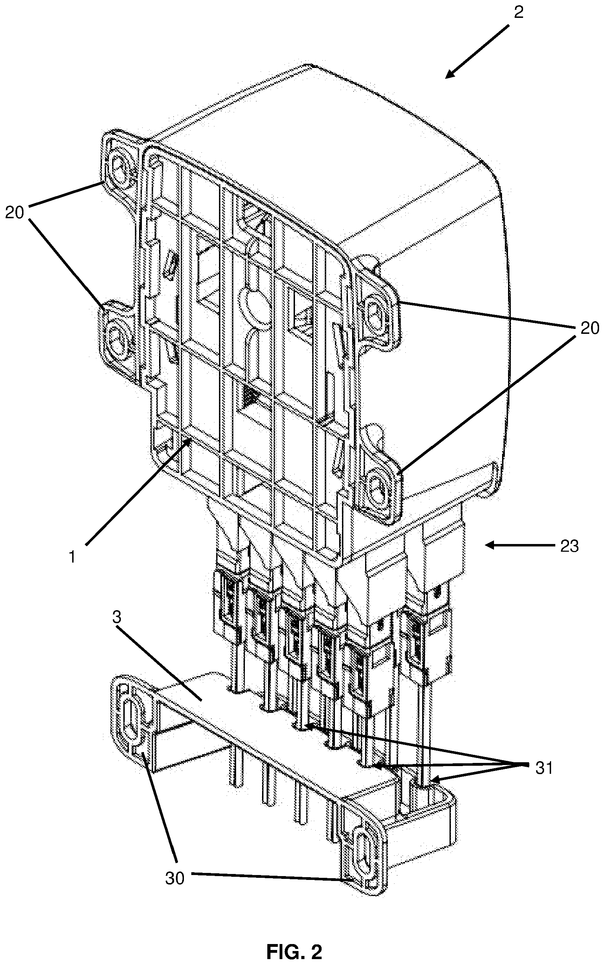

More broadly, as seen in **figures 1** **and** **2**, the utility model is directed to an optical termination box for optical power distribution comprising a base 1 and a cover 2 that can be fitted, wherein, when the base 1 and the cover 2 are fitted, the access to the inside of the box is made unfeasible.

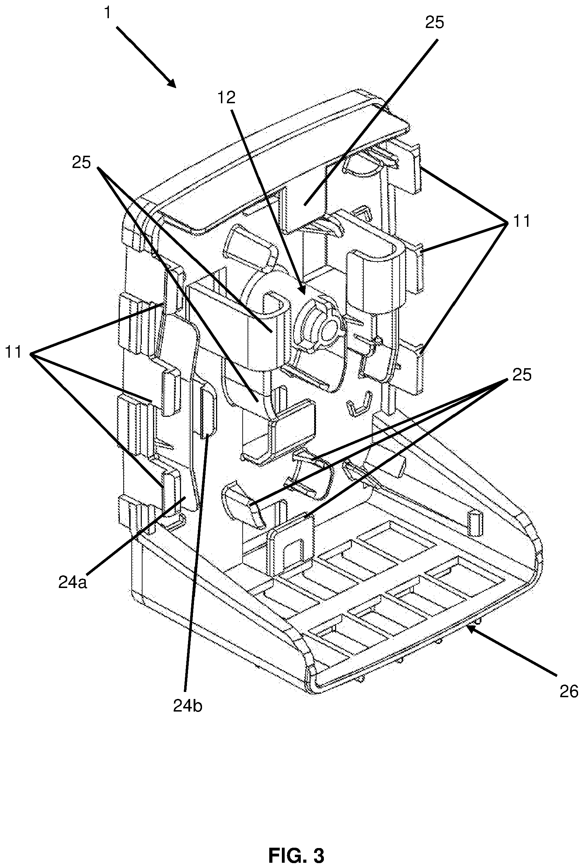

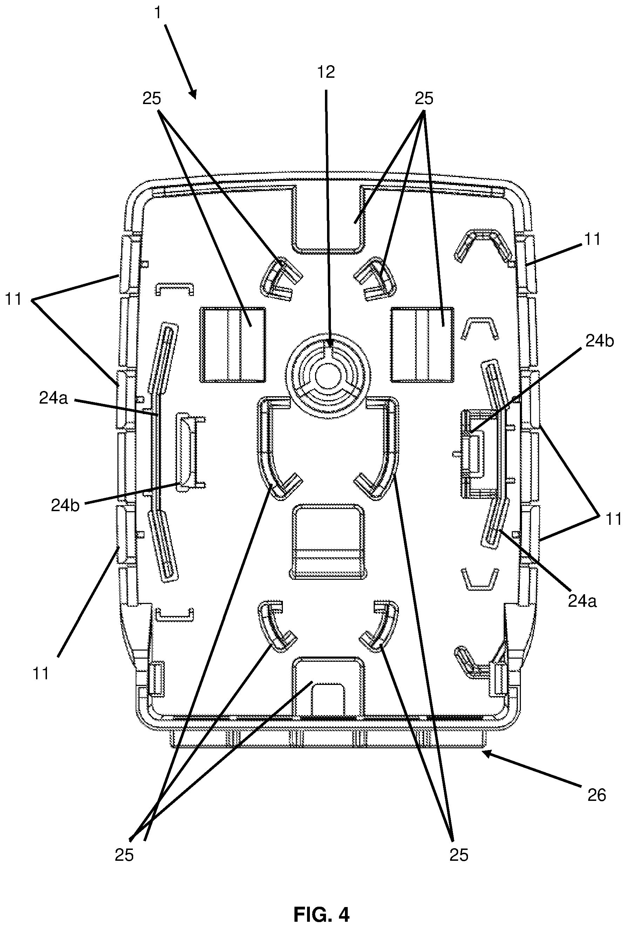

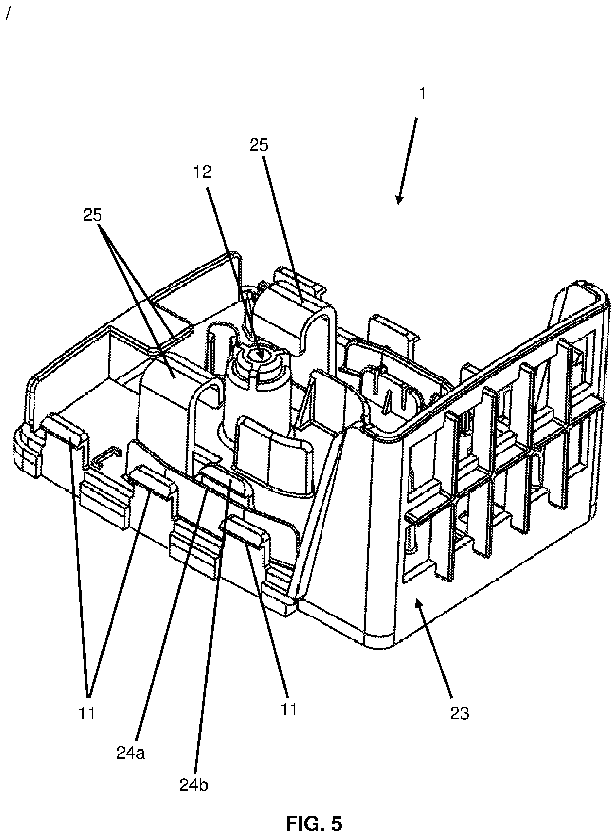

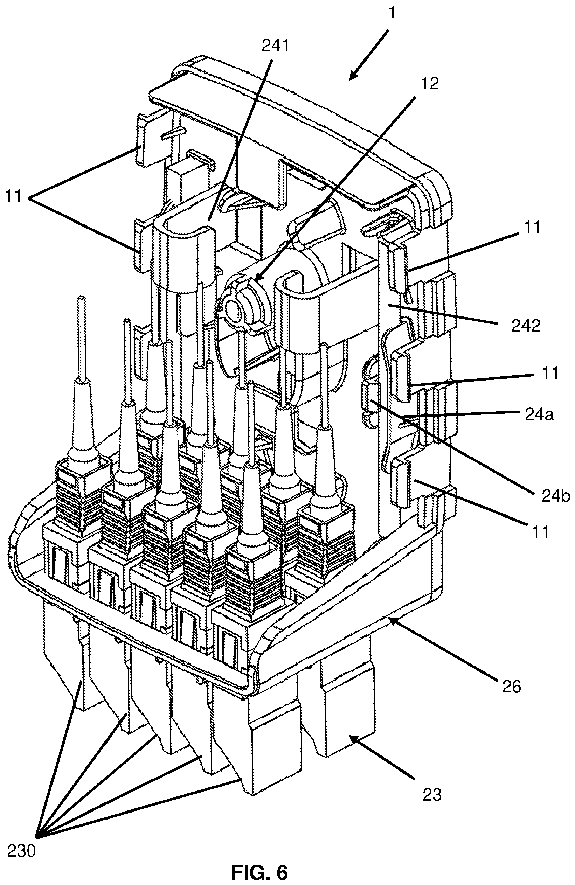

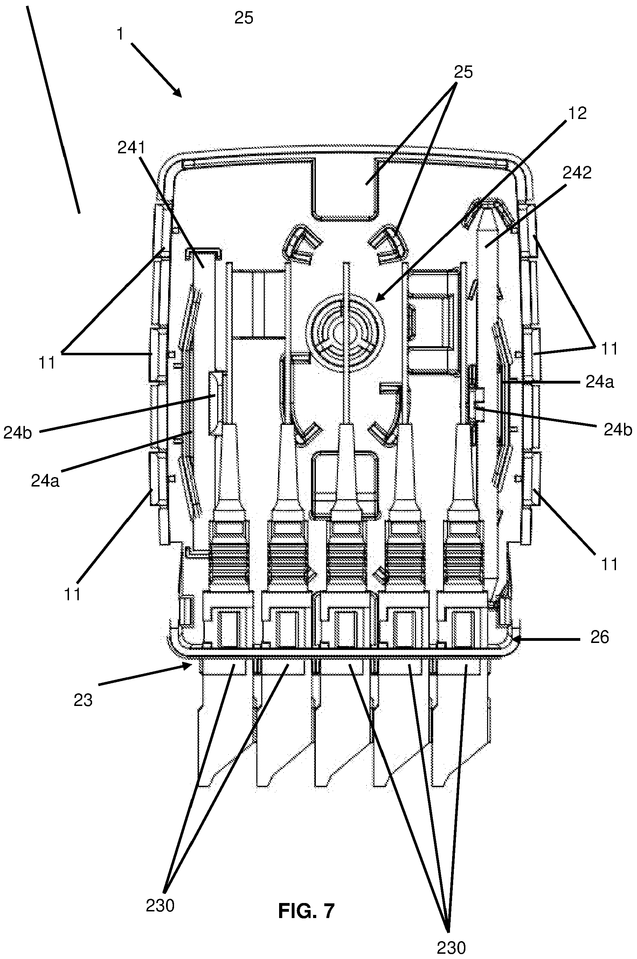

The following description can be better observed based on **figures 3 to 7**, which illustrate different views of the base element 1 of the claimed optical termination box. The utility model also provides for the base 1 to comprise supports 25 to position fiber optics circumferentially over the base 1, forming a single circumferential bundle.

The base 1 further comprises a support 24a/24b for unbalanced optical splitter 242, and a support 24a/24b for balanced optical splitter 241 positioned on opposite sides of the base 1. Thus, each optical splitter 241/242 is positioned in a side of the device facilitating the distribution of cables inside the distribution box.

In addition, the base 1 also comprises a support 26 for a set 23 of optical adapters that connect to optical cable connectors 230 positioned in their lower portion, comprising an adapter for optical signal input, an adapter for redistribution of an optical signal, and at least two adapters for feeding the optical signal to a consumer unit.

Thus, the optical termination box is fed by the optical signal input connector and the optical signal is internally split, so that a part of this optical signal is redirected to a subsequent optical termination box by the optical signal redistribution connector, and the other part is directed to the consumer units by the optical signal feeding connectors on the consumer unit.

It should be emphasized herein that the number of optical signal feeding connectors to a consumer unit may vary, and two connectors are provided at the very least. The optional configuration illustrated in the figures provides for the use of 8 of these connectors and adapters. However, this number will vary according to each application, so this feature does not represent a limitation to the scope of the utility model.

The detailed operation of the optical termination box is as follows: the unbalanced optical splitter is fed by the optical signal input connector, generating: a higher power optical signal, feeding the optical signal redistribution connector; and a lower power optical signal feeding the balanced optical splitter.

In turn, the balanced optical splitter is adapted to equally divide the optical signal received from the unbalanced optical splitter, and direct the split optical signals to the at least two optical signal feeding connectors to a consumer unit. As already described, more than two optical signal feeding connectors to a consumer unit can be adopted; so, preferably, eight are adopted.

In order for the cover 2 and the base 1 to fit perfectly, it is optionally provided for that the base 1 and the cover 2 comprise a snap-fit system, wherein the base 1 comprises three toothed fins 11 on each side that snap-fit into three corresponding fitting grooves 21 on each inner side of the cover.

Thus, after assembling the internal elements of the optical termination box on the base, the user simply fits the cover 2 over the base 1, exerting pressure until each toothed fin 11 fits into the respective fitting groove 21, locking the two elements and protecting their interior.

Optionally, a central screw locking system is also provided for, wherein the base 1 comprises a central projection 12 with a through hole and the cover 2 comprises a central projection 22 with inner thread, wherein the hole and the inner threads are aligned so that a screw exerts a locking pressure between the base 1 and the cover.

Thus, the utility model as now disclosed provides, in an innovative way, an optical termination box that can be completely sealed, so that there is no need to open the product to carry out optical splices, avoiding internal access for the installation team and providing evidence if the product is tampered with.

Regarding the optical cable supports 25 of the base, it is emphasized that a series of supports 25 can be adopted, among them, inverted "L" supports, horizontal clamps, hook-shaped supports, and flat or curved barriers. It is important to point out that the type and quantity of adopted supports 25 can vary, as long as the substantially circumferential shape of the fibers is maintained. Thus, this feature does not represent a limitation to the scope of the utility model.

Optionally, each support 24a/24b for optical splitter 241/242 is composed of a fixed bulkhead 24b and a spring element 24a, wherein the spring element 24a is adapted to press the optical splitter 241/242 against the fixed bulkhead 24b. Other ways of attaching the optical splitter 241/242 can be adopted, such as clamp elements or any other snap-fittings, so that this does not represent a limitation to the scope of the utility model.

As already described, optionally the set 23 of optical adapters 230 for connection to optical cable connectors comprises a total of ten adapters 230 of optical cable connectors, wherein the same are arranged in two rows with five optical adapters 230 each.

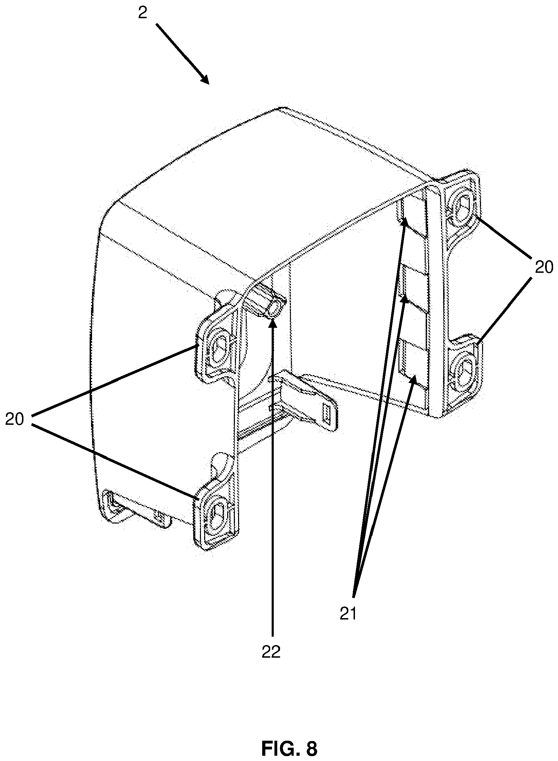

Referring to **figures 1****,** **2** and **8**, it is observed that, optionally, the cover 2 is provided with means for attaching the optical termination box to a bulkhead (usually a wall). In the illustrated configuration, the cover 2 is provided with two side tabs (20) for attachment with holes.

Optionally, all elements of the optical termination box are made of reinforced polymeric material. However, other materials can be adopted for their manufacture, so this does not represent a limitation on the scope of the utility model.

Optionally, the utility model also provides for the adoption of a mobile cable anchor 3, detached from the main body, comprising means 31 for anchoring each optical cable connected to each optical cable connector of the optical termination box, and comprising means of attachment 31 of the anchor to a bulkhead, wherein the detached cable anchor 3 can be positioned in an aligned or misaligned way with respect to the assembly.

Thus, the mobile cable anchor 3 allows the cables to be anchored at different angles as long as the minimum bending radius of the cable is respected. In addition, it can be used beside or below the box, if there is space within the distribution board of the place where it is applied.

In addition, the main objective of the utility model is achieved, since the optical termination box allows that, from the arrival in the building of a cable of only one fiber (distribution cable), it is possible to make the service of several consumer units without the obligation to have an interconnection box on each floor to carry out distribution. This function is possible due to the optical split ratio of the connectorized optical splitters that are encapsulated in the product.

In addition, the optical termination box enables a complete installation in a building without the need for fusion. So that all connections are made by field connectorization.

Thus, for the application of the product, the employee only needs to connect the outer cables to the apparatus, which greatly speeds up the operator's activity, generating great savings for the activity.

An additional advantage achieved by the box described herein refers to the compact dimension that allows its installation in ducts of small dimension and in congested ducts of buildings, in addition to having a support for mobile anchoring 3 of internal building cables to be used when necessary and be made in a sealed manner to prevent undue internal access.

Numerous variations within the scope of protection of the present application are allowed. Accordingly, it reinforces the fact that the present utility model is not limited to the particular configurations and embodiments described above.

## Claims

1. An optical termination box for optical power distribution comprising a base (1) and a cover (2) that can be fitted, wherein, when the base (1) and the cover (2) are fitted, the access to the interior of the box is made unfeasible, **characterized in that** base (1) comprises:
internal supports (25) for positioning the fiber optics of splitters circumferentially over the base, forming a single circumferential bundle of fibers;
a support (24a/24b) for unbalanced optical splitter (242), and a support (24a/24b) for balanced optical splitter (241) positioned on opposite sides of the base (1); and
a support (26) for a set (23) of optical adapters that make connections with connectors (230) of optical cables positioned in the lower portion of the base (1), comprising an adapter for optical signal input, an adapter for optical signal redistribution, and at least two adapters for feeding an optical signal to a consumer unit,
wherein the unbalanced splitter (242) is fed by the optical signal input connector generating: a higher power optical signal, feeding the optical signal redistribution connector; and a lower power optical signal feeding the balanced optical splitter (241), and
wherein the balanced optical splitter (241) is adapted to equally split the optical signal received from the unbalanced optical splitter (242), and direct the split optical signals to the at least two optical signal feeding connectors to a consumer unit.

2. The optical termination box according to claim 1, **characterized in that** the set (23) of optical adapters that make the connection with connectors (230) of optical cables comprises ten optical adapters (230), which are: one for the optical signal input, one for the optical signal redistribution, and eight for feeding an optical signal to a consumer unit.

3. The optical termination box according to claim 1 or 2, **characterized in that** the base (1) and the cover (2) comprise a snap-fit system, wherein the base (1) comprises three toothed fins (11) on each side adapted to snap-fit into three fitting corresponding grooves (21) on each inner side of the cover (2).

4. The optical termination box according to any one of claims 1 to 3, **characterized in that** it comprises a central locking system, wherein the base (1) comprises a central projection (12) with a through hole and the cover (2) comprises a central projection (22) with inner thread, wherein the through hole and the inner thread are aligned, wherein a screw is adapted to exert a locking pressure between the base (1) and the cover.

5. The optical termination box according to any one of claims 1 to 4, **characterized in that** internal supports (25) of splitter fiber optics of base (1) are composed of at least one of: inverted "L" support; horizontal clamp; hook-shaped support; flat barrier; and curved barrier.

6. The optical termination box according to any one of claims 1 to 5, **characterized in that** each support (24a/24b) for an optical splitter (241/242) comprises a fixed bulkhead (24b) and a spring element (24a), wherein the spring element (24a) is adapted to press the optical splitter (24a/24b) against the fixed bulkhead (24b).

7. The optical termination box according to any one of claims 1 to 6, **characterized in that** the cover (2) comprises means for attaching the optical termination box to a bulkhead, wherein the cover (2) is provided with two side tabs (20) for attaching with holes.

8. The optical termination box according to any one of claims 1 to 7, **characterized in that** it is made of reinforced polymeric material.

9. The optical termination box according to any one of claims 1 to 8, **characterized in that** it comprises a mobile cable anchor (3), detached from the main body, comprising: means (30) for anchoring each optical cable connected to each optical cable connector from the optical termination box; and means for attaching (31) the anchor (3) to a bulkhead, wherein the mobile cable anchor (3) is positioned aligned or misaligned with respect to the main body.
